(19) Europäisches Patentamt
European Patent Office
Office européen des brevets

(11) EP 0 618 021 B1

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(51) Int. Cl.[6]: **B21B 37/58**, G05B 13/02

(21) Anmeldenummer: 93105168.4

(22) Anmeldetag: **29.03.1993**

(54) **Verfahren und Anordnung zur hydraulischen Walzspaltregelung**

Method and device for hydraulic roll-gap control

Procédé et dispositif pour régler hydrauliquement l'emprise de laminage

(84) Benannte Vertragsstaaten:
**AT DE ES**

(43) Veröffentlichungstag der Anmeldung:
**05.10.1994 Patentblatt 1994/40**

(73) Patentinhaber: SIEMENS
AKTIENGESELLSCHAFT
D-80333 München (DE)

(72) Erfinder:
• **Berger, Klaus-Dieter, Dipl.-Ing.**
**W-8552 Höchstadt/A. (DE)**

• **Meyer, Wolfgang, Dipl.-Ing.**
**W-8526 Bubenreuth (DE)**

(56) Entgegenhaltungen:
**EP-A- 0 241 286     DE-A- 4 008 510**

• **PATENT ABSTRACTS OF JAPAN vol. 11, no. 225 (M-609)22. Juli 1987 & JP-A-62 040 925 (KOBE STEEL) 21 Februar 1987**
• **PATENT ABSTRACTS OF JAPAN vol. 8, no. 148 (M-308)11. Juli 1984 & JP-A-59 045 014 (SHIN NIPPON SEITETSU) 13 März 1984**

## Beschreibung

Die Erfindung betrifft ein Verfahren zur hydraulischen Walzspaltregelung in einem Walzgerüst mittels einer hydraulischen Anstellvorrichtung, die über ein Stellventil betätigt wird, wobei walzspaltrelevante Istwerte, wie die Anstellposition, die Walzkraft und/oder der Hydraulikdruck erfaßt werden, mit zugehörigen Sollwerten verglichen werden und die aus dem Vergleich resultierende Regeldifferenz einer Regelanordnung zur Erzeugung einer Stellgröße für das Stellventil zugeführt wird.

Die Erfindung betrifft ferner eine Anordnung zur hydraulischen Walzspaltregelung in einem Walzgerüst mit einer über ein Stellventil betätigbaren hydraulischen Anstellvorrichtung, mit Meßeinrichtungen zur Erfassung von walzspaltrelevanten Istwerten, wie der Anstellposition, der Walzkraft und/oder des Hydraulikdrucks, und mit einer Regelanordnung, die eingangsseitig mit der Regeldifferenz zwischen den Istwerten und zugehörigen Sollwerten beaufschlagt ist und ausgangsseitig eine Stellgröße erzeugt, die dem Stellventil zugeführt ist.

Eine solche Anordnung und ein solches Verfahren sind z.B. aus der DE 26 43 686 B2 bekannt.

Da die Dynamik des Regelvorganges von der gerade aktuellen Anstellposition, d. h. der aktuellen Position des Hydraulikzylinders in der Anstellvorrichtung, der jeweiligen Richtung der Verstellung der Anstellposition, der Druckdifferenz zwischen beiden Seiten des Hydraulikzylinders und der jeweiligen Walzkraft abhängig ist, ist die Regelanordnung bei bekannten hydraulischen Walzspaltregelungen für einen definierten Arbeitspunkt ausgelegt. Dabei wurden die angegebenen Einflüsse auf die Dynamik des Regelvorganges durch Verstellung der Reglerverstärkung anhand statischer Kennlinien in Grenzen gehalten. Da das dynamische Verhalten mathematisch nur sehr auf-wendig und ungenau beschrieben werden kann, blieb es bisher unberücksichtigt.

Aus der DE 40 08 510 A1 ist die Verwendung von Fuzzy-Folgerungen bei der Regelung in Walzanlagen bekannt, jedoch werden dort die Fuzzy-Folgerungen im Rahmen eines Mustererkennungsverfahrens benutzt, bei dem auf der Grundlage von Erfahrungswissen über die typischen Einflußmöglichkeiten unterschiedlicher Stellglieder beispielsweise auf die Querschnittsform des Walzgutes die zur Erzielung einer gewünschten Querschnittsform erforderlichen Stellgrößen für die Stellglieder ermittelt werden.

Der Erfindung liegt die Aufgabe zugrunde, nicht nur für einen definierten Arbeitspunkt, sondern für den gesamten Arbeitsbereich eine hohe Regelungsgüte und damit eine enge Dickentoleranz für das Walzgut zu erreichen.

Gemäß der Erfindung wird die Aufgabe dadurch gelöst, daß bei dem Verfahren der eingangs angegebenen Art in Abhängigkeit von den Istwerten und der Stellgröße auf der Grundlage von Fuzzy-Folgerungen eine Anpassung von Regelparametern der Regelanordnung an die Dynamik des Regelvorganges erfolgt.

Bezüglich der eingangs genannten Anordnung wird die Aufgabe dadurch gelöst, daß eine Fuzzy-Auswerteeinrichtung eingangsseitig mit den Istwerten und der Stellgröße beaufschlagt ist und ausgangsseitig mit einem Steuereingang der Regelanordnung zur Einstellung von Regelparametern der Regelanordnung verbunden ist.

Durch die Erfindung wird in überraschender Weise mit einfachen Mitteln für den gesamten Arbeitsbereich der Walzspaltregelung eine hohe Regelungsgüte erreicht.

Vorteilhafte Weiterbildungen des erfindungsgemäßen Verfahrens und der erfindungsgemäßen Anordnung sind den abhängigen Ansprüchen zu entnehmen.

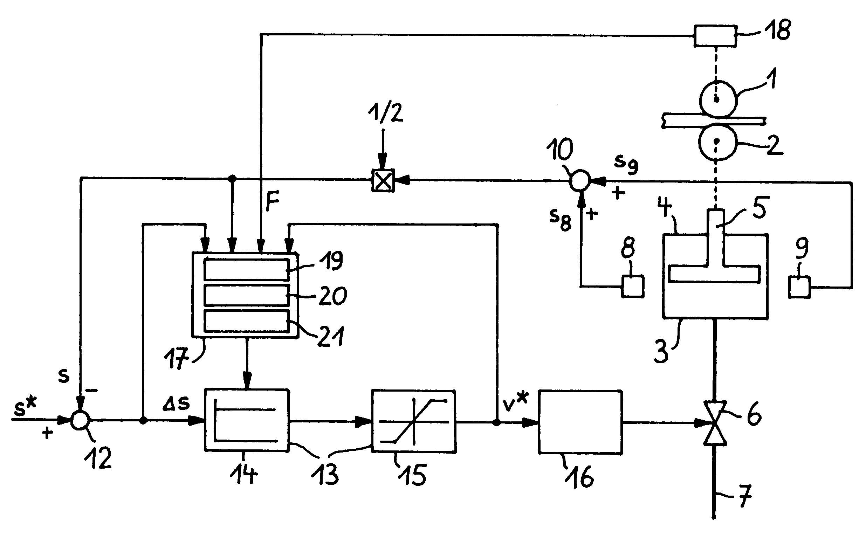

Zur Erläuterung der Erfindung wird im folgenden auf die Figur der Zeichnung Bezug genommen, die ein Ausführungsbeispiel für die erfindungsgemäße Anordnung zur hydraulischen Walzspaltregelung zeigt.

Zur Regelung des Walzspaltes zwischen zwei Walzen 1 und 2 wirkt auf diese eine hydraulische Anstellvorrichtung 3, bestehend aus einem Hydraulikzylinder 4 und einem darin beweglichen Kolben 5. Die hydraulische Anstellvorrichtung 3 ist über ein Stellventil 6 mit einer Hydraulikleitung 7 verbunden. Das Stellventil 6 dient zur Einstellung der Anstellposition, d. h. der Position des Kolbens 5, die mit Hilfe von zwei Positionsgebern 8 und 9 erfaßt wird. Die Ausgangssignale $s_8$ und $s_9$ der beiden Positionsgeber 8 und 9 werden in einem Addierglied 10 aufsummiert und in einem nachfolgenden Multiplizierglied 11 mit dem Faktor 1/2 multipliziert, wobei das so erhaltene Ergebnis $s=(s_8+s_9)/2$ den Istwert der Anstellposition bezeichnet. Dieser Istwert s wird mit negativem Vorzeichen einem Vergleichsglied 12 zugeführt, dem außerdem ein Sollwert für die Anstellposition $s^*$ zugeführt wird. Mit der von dem Vergleichsglied 12 erzeugten Regeldifferenz $\Delta s=s^*-s$ wird eine Regelanordnung 13, bestehend aus einem Proportionalregler 14 und einer nachgeordneten Begrenzerstufe 15 beaufschlagt, der ausgangsseitig einen Geschwindigkeitssollwert $v^*$ zur Einstellung der Verstellgeschwindigkeit für den Kolben 5 erzeugt. Dieser Geschwindigkeitssollwert $v^*$ wird einer Stelleinrichtung 16 zur Betätigung des Stellventils 6 zugeführt.

Der Regelanordnung 13 ist eine Fuzzy-Auswerteeinrichtung 17 zugeordnet, der eingangsseitig der Istwert der Anstellposition s, der Geschwindigkeitssollwert $v^*$ und der mit Hilfe eines Druckfühlers 18 erfaßte Istwert der Walzkraft F zugeführt wird und die auf der Grundlage von Fuzzy-Folgerungen eine Anpassung der Regelparameter der Regelanordnung 13 , hier der Reglerverstärkung des Proportionalreglers 14, an die Dynamik des Regelvorganges vornimmt. Außerdem ist bei dem gezeigten Ausführungsbeispiel auch noch die Regeldifferenz $\Delta s$ der Fuzzy-Auswerteeinrichtung 17 zugeführt, um hierüber beim Regelvorgang das Auftreten von Überschwingungen verhindern zu können. Die Fuzzy-Auswerteeinrichtung 17 enthält in an sich bekannter Weise jeweils einen Funktionsblock 19, 20 bzw. 21 für die Fuzzifizierung der Eingangswerte, Interferenz und Defuzzifizierung.

Über die Hydraulikleitung 7 wird ein bestimmter Hydraulikdruck zur Verfügung gestellt, wobei eine Änderung der Anstellposition s aufgrund der Druckdifferenz zwischen den beiden Seiten des Stellventils 6 erfolgt. Diese Druckdifferenz ist von der Walzkraft F abhängig, so daß auch die Geschwindigkeit zur Verstellung der Anstellposition s von der momentanen Walzkraft F abhängt. Hinzu kommt eine Abhängigkeit der Verstellgeschwindigkeit von der Richtung der Verstellung der Anstellposition s, je nachdem, ob der Walzspalt verkleinert wird, d. h. die Anstellposition s gegen die Walzkraft F verändert wird, oder ob der Walzspalt vergrößert und die Anstellposition s in Richtung der Walzkraft F verändert wird. Schließlich ist die Verstellgeschwindigkeit auch noch von der Höhe der auf den Kolben 5 wirkenden Hydrauliksäule in der Anstellvorrichtung 3 abhängig, da das Hydrauliköl in nicht vernachlässigbarem Maße kompressibel ist.

Ziel der Anpassung der Reglerverstärkung des Reglers 14 ist es bei gleicher Regeldifferenz $\Delta s$ eine gleiche Verstellgeschwindigkeit für die Anstellposition s zu erreichen. Aufgrund der Fuzzy-Folgerungen wird die Reglerverstärkung vergrößert, wenn die Anstellposition s bei großer Walzkraft F entgegen deren Richtung verändert wird, bei geringer Walzkraft F in deren Richtung verändert wird und/oder wenn die Hydrauliksäule in der Anstellvorrichtung 3 aufgrund der momentanen Anstellposition s hoch ist. Umgekehrt wird die Reglerverstärkung herabgesetzt, wenn die Anstellposition s bei großer Walzkraft F in deren Richtung verändert wird, bei geringer Walzkraft gegen deren Richtung verändert wird und/oder die Hydrauliksäule klein ist.

## Patentansprüche

1. Verfahren zur hydraulischen Walzspaltregelung in einem Walzgerüst mittels einer hydraulischen Anstellvorrichtung (3), die über ein Stellventil (6) betätigt wird, wobei walzspaltrelevante Istwerte, wie die Anstellposition (s), die Walzkraft (F) und/oder der Hydraulikdruck erfaßt werden, mit zugehörigen Sollwerten (s*) verglichen werden und die aus dem Vergleich resultierende Regeldifferenz ($\Delta s$) einer Regelanordnung (13) zur Erzeugung einer Stellgröße (v*) für das Stellventil (6) zugeführt wird, **dadurch gekennzeichnet**, daß in Abhängigkeit von den Istwerten (s, F) und der Stellgröße (v*) auf der Grundlage von Fuzzy-Folgerungen eine Anpassung von Regelparametern der Regelanordnung (13) an die Dynamik des Regelvorganges erfolgt.

2. Verfahren nach Anspruch 1, **dadurch gekennzeichnet**, daß die Anpassung der Regelparameter zusätzlich in Abhängigkeit von der Regeldifferenz ($\Delta s$) erfolgt.

3. Verfahren nach Anspruch 1 oder 2, **dadurch gekennzeichnet**,

daß der Regelanordnung (13) eingangsseitig die Regeldifferenz ($\Delta s$) zwischen dem Sollwert (s*) und dem Istwert (s) der Anstellposition zugeführt wird und die Regelanordnung (13) als Stellgröße den Sollwert (v*) für die Geschwindigkeit zur Verstellung der Anstellposition erzeugt, und daß die Reglerverstärkung in Abhängigkeit von dem Istwert (s) der Anstellposition, der Walzkraft (F) und der Verstellgeschwindigkeit (v*) in der Weise geändert wird, daß die Reglerverstärkung vergrößert wird, wenn die Anstellposition bei großer Walzkraft (F) entgegen deren Richtung verändert wird, bei geringer Walzkraft (F) in deren Richtung verändert wird und/oder wenn die Anstellvorrichtung (3) bei der momentanen Anstellposition (s) ein großes Hydraulikölvolumen aufweist und daß die Reglerverstärkung verkleinert wird, wenn die Anstellposition bei großer Walzkraft (F) in deren Richtung verändert wird, bei geringer Walzkraft (F) entgegen deren Richtung verändert wird und/oder die Anstellvorrichtung (3) bei der momentanen Anstellposition (s) ein kleines Hydraulikölvolumen aufweist.

4. Anordnung zur hydraulischen Walzspaltregelung in einem Walzgerüst mit einer über ein Stellventil (6) betätigbaren hydraulischen Anstellvorrichtung (3), mit Meßeinrichtungen (8, 9, 18) zur Erfassung von walzspaltrelevanten Istwerten, wie der Anstellposition (s), der Walzkraft (F) und/oder des Hydraulikdrucks, und mit einer Regelanordnung (13), die eingangsseitig mit der Regeldifferenz ($\Delta s$) zwischen den Istwerten (s) und zugehörigen Sollwerten (s*) beaufschlagt ist und ausgangsseitig eine Stellgröße (v*) erzeugt, die dem Stellventil (6) zugeführt ist, **dadurch gekennzeichnet**, daß eine Fuzzy-Auswerteeinrichtung (17) eingangsseitig mit den Istwerten (s, F) und der Stellgröße (v*) beaufschlagt ist und ausgangsseitig mit einem Steuereingang der Regelanordnung (13) zur Einstellung von Regelparametern der Regelanordnung (13) verbunden ist.

5. Anordnung nach Anspruch 4, **dadurch gekennzeichnet**, daß der Fuzzy-Auswerteeinrichtung (17) eingangsseitig zusätzlich die Regeldifferenz ($\Delta s$) zugeführt ist.

## Claims

1. Method for hydraulic roll-gap control in a roll stand by means of a hydraulic setting arrangement (3) which is actuated by way of a regulating valve (6), wherein actual values which are relevant to the roll gap, such as the setting position (s), the roll separating force (F) and/or the hydraulic pressure, are acquired, they are compared with associated setpoint values (s*), and the system deviation ($\Delta s$) resulting from the comparison is fed to a control arrangement (13) to generate a manipulated variable (v*) for the regulating valve (6), characterised in that control parameters of the control arrangement (13) are adapted to the dynamic performance of the control process, as a function of the actual values (s, F) and the manipulated variable (v*), on the basis of fuzzy-logic deductions.

2. Method according to claim 1, characterised in that in addition the control parameters are adapted as a function of the system deviation (Δs).

3. Method according to claim 1 or 2, characterised in that the system deviation (Δs) between the setpoint value (s*) and the actual value (s) of the setting position is fed to the input side of the control arrangement (13) and the control arrangement (13) generates as a manipulated variable the velocity setpoint value (v*) for the adjustment of the setting position and in that the controller amplification is changed as a function of the actual value (s) of the setting position, of the roll separating force (F) and of the speed of adjustment (v*) in such a way that the controller amplification is increased if the setting position given a large roll separating force (F) is changed in an opposite direction to that of the latter, if the setting position given a small roll separating force (F) is changed in the direction of the latter and/or if the setting arrangement (3) has a large volume of hydraulic fluid in the instantaneous setting position (s) and in that the controller amplification is decreased if the setting position given a large roll separating force (F) is changed in the direction of the latter, if the setting position given a small roll separating force (F) is changed in an opposite direction to that of the latter and/or the setting arrangement (3) has a small volume of hydraulic fluid in the instantaneous setting position (s).

4. Arrangement for hydraulic roll-gap control in a roll stand having a hydraulic setting arrangement (3) which can be actuated by way of a regulating valve (6), having measuring devices (8, 9, 18) for the acquisition of actual values which are relevant to the roll gap, such as the setting position (s), the roll separating force (F) and/or the hydraulic pressure, and having a control arrangement (13) to the input side of which the system deviation (Δs) between the actual values (s) and associated setpoint values (s*) is applied and on the output side of which a manipulated variable (v*) is generated and is fed to the regulating valve (6), characterised in that the actual values (s, F) and the manipulated variable (v*) are applied to the input side of a fuzzy-evaluation device (17), the output side of which is connected to a control input of the control arrangement (13) for the purpose of setting control parameters of the control arrangement (13).

5. Arrangement according to claim 4, characterised in that in addition the system deviation (Δs) is fed to the input side of the fuzzy-evaluation device (17).

## Revendications

1. Procédé pour régler hydrauliquement l'emprise de laminage dans une cage de laminoir au moyen d'un dispositif de serrage hydraulique (3) actionné par une servo-soupape (6), les valeurs effectives relatives à l'emprise de laminage, comme la position de serrage (s), la force de laminage (F) et/ou la pression hydraulique étant saisies, comparées avec les valeurs de consigne (s*) correspondantes et la différence de réglage (Δs) découlant de la comparaison étant amenée à un dispositif de réglage (13) en vue de la génération d'une valeur de réglage (v*) pour la servo-soupape, caractérisé en ce que en fonction des valeurs effectives (s, F) et de la valeur de réglage (v*), une adaptation des paramètres de réglage du dispositif de réglage (13) à la dynamique du processus de réglage est effectuée sur la base de déductions floues.

2. Procédé selon la revendication 1, caractérisé en ce que l'adaptation des paramètres de réglage est effectuée en complément en fonction de la différence de réglage (Δs).

3. Procédé selon la revendication 1 ou 2, caractérisé en ce que côté entrée, la différence de réglage (Δs) entre la valeur de consigne (s*) et la valeur effective (s) est amenée au dispositif de réglage (13) et le dispositif de réglage (13) génère, en tant que valeur de réglage, la valeur de consigne (v*) pour la vitesse de réglage de la position de serrage, et en ce que l'amplification de réglage est modifiée en fonction de la valeur effective (s) de la position de serrage, de la force de laminage (F) et de la vitesse de réglage (v*) de telle sorte que l'amplification de réglage est accrue lorsque la position de serrage est modifiée dans le sens contraire de la force de laminage en présence d'une force de laminage (F) élevée, lorsqu'elle est modifiée dans le même sens que la force de laminage en présence d'une force de laminage (F) réduite et/ou lorsque le dispositif de serrage (3) présente un important volume hydraulique dans la position actuelle de serrage (s), et de telle sorte que l'amplification de réglage est diminuée lorsque la position de serrage est modifiée dans le même sens que la force de laminage en présence d'une force de laminage (F) élevée, lorsqu'elle est modifiée dans le sens contraire de la force de laminage en présence d'une force de laminage (F) réduite et/ou lorsque le dispositif de serrage (3) présente un volume hydraulique réduit dans la position actuelle de serrage (s).

4. Dispositif de réglage hydraulique de l'emprise de laminage dans une cage de laminoir avec un dispositif de serrage (3) hydraulique actionnable par le biais d'une servo-soupape (6), doté de dispositifs de mesure (8, 9, 18) permettant de saisir les valeurs effectives relatives à l'emprise de laminage, comme la position de serrage (s), la force de laminage (F) et/ou la pression hydraulique, ainsi que d'un dispositif de réglage (13) qui est alimenté, côté entrée, par la différence de réglage ($\Delta$s) entre la valeur effective (s) et les valeurs de consigne (s*) respectives et génère, côté sortie, une valeur de réglage (v*) amenée à la servo-soupape (6), caractérisé en ce qu'un dispositif d'évaluation floue (17) est alimenté côté entrée des valeurs effectives (s, F) et de la valeur de réglage (v*) et relié côté sortie avec une entrée de commande du dispositif de réglage (13) permettant le réglage de paramètres de réglage du dispositif de réglage (13).

5. Dispositif selon la revendication 4, caractérisé en ce que la différence de réglage ($\Delta$s) est amenée en complément, côté entrée, au dispositif d'évaluation floue (17).